**Europäisches Patentamt**

**European Patent Office**

**Office européen des brevets**

(19)

(11) **EP 0 551 104 B2**

(12) **NEUE EUROPÄISCHE PATENTSCHRIFT**

(45) Veröffentlichungstag und Bekanntmachung des Hinweises auf die Entscheidung über den Einspruch:
**19.03.2003 Patentblatt 2003/12**

(45) Hinweis auf die Patenterteilung:
**07.02.1996 Patentblatt 1996/06**

(21) Anmeldenummer: **93100114.3**

(22) Anmeldetag: **07.01.1993**

(51) Int Cl.$^7$: **B23D 61/12**, B23D 61/02

(54) **Sägeblatt**

Saw blade

Lame de scie

(84) Benannte Vertragsstaaten:
**AT BE CH DK ES FR GB IE IT LI NL PT SE**

(30) Priorität: **10.01.1992 DE 4200423**

(43) Veröffentlichungstag der Anmeldung:
**14.07.1993 Patentblatt 1993/28**

(73) Patentinhaber: **WIKUS-Sägenfabrik Wilhelm H. Kullmann**
**D-34286 Spangenberg (DE)**

(72) Erfinder:
• **Kullmann, Jörg H. Dr. techn.**
**W-3509 Spangenberg (DE)**
• **Fluhrer, Manfred, Dipl.-Ing.**
**W-3509 Spangenberg (DE)**

(74) Vertreter: **Rehberg, Elmar, Dipl.-Ing.**
**Patentanwalt**
**Postfach 31 62**
**37021 Göttingen (DE)**

(56) Entgegenhaltungen:
| | |
|---|---|
| **EP-A- 0 266 022** | **CH-A- 536 176** |
| **DE-A- 2 516 137** | **DE-A- 3 300 791** |
| **DE-A- 3 307 170** | **DE-A- 3 611 063** |
| **DE-A- 3 741 709** | **DE-C- 640 987** |
| **GB-A- 22 929** | **JP-A- 5 226 679** |
| **JP-A- 61 241 017** | **US-A- 4 011 783** |

• **SOVIET INVENTIONS ILLUSTRATED Section PQ, Week 8607, 25. Februar 1986 Derwent Publications Ltd., London, GB; Class P54, AN 86-047038/07 & Su-A-1 168 357 (KUIBYSHEV POLY) 23 Juli 1985**

EP 0 551 104 B2

**Beschreibung**

Die Erfindung bezieht sich auf ein Sägeblatt mit einem Grundkörper und ungeschränkten Zähnen mit Schneiden, die in sich wiederholenden Zyklen vorgesehen sind und jeder Zyklus mindestens eine aus mindestens drei Zähnen bestehende Zahngruppe mit von Zahn zu Zahn abnehmender Höhe und dabei zunehmender Breite aufweist, wobei alle Zähne symmetrisch zu einer Längsmittelebene durch den Grundkörper ausgebildet sind. Die Erfindung kann sowohl bei einem Bandsägeblatt, also einem Sägeblatt mit linearer Anordnung der Zähne hintereinander als auch bei einem Kreissägeblatt angewendet werden.

Aus der DE-A-36 11 063 ist ein Sägeblatt mit Zähnen bekannt, die in sich wiederholenden Zyklen vorgesehen sind. Jeder Zyklus bildet dabei zugleich eine Zahngruppe, so daß die Anzahl der Zähne pro Zyklus mit der Anzahl der Zähne pro Gruppe übereinstimmt. Die Zähne in der Gruppe bzw. im Zyklus werden hinsichtlich eines Führungszahns, also dem ersten Zahn, in einem Zyklus oder Gruppe und hinsichtlich Folgezähnen unterschieden. Der Führungszahn besitzt dabei die größte Höhe und die Zahnhöhe nimmt in der Gruppe ab. Die Folgezähne sind als geschränkte Zähne ausgebildet und in der Regel abwechselnd nach links und rechts geschränkt vorgesehen, um auf diese Art und Weise die Breite des Schnittkanals größer zu gestalten als die Breite des Grundkörpers des Sägeblatts. Statt nur eines ungeschränkten Führungszahns können auch zwei ungeschränkte Führungszähne vor den geschränkten Folgezähnen vorgesehen sein, wobei es möglich ist, den ersten Führungszahn außen mit zwei Phasen auszubilden und insoweit symmetrisch zu einer Längsmittelebene des Grundkörpers zu gestalten. Die beiden Führungszähne werden dabei in Verbindung mit einem Höhenversatz ähnlich wie die bekannten Vorund Nachschneider eines Kreissägeblatts gestaltet und die wirksame Schnittkante des einen Führungszahns wird dabei in der bekannten Weise auf zwei Führungszähne aufgeteilt. Die Breite der beiden Führungszähne stimmt dabei mit der Breite des Grundkörpers überein. Demzufolge sind in der Gruppe bzw. im Zyklus nachfolgend notwendigerweise geschränkte Folgezähne vorgesehen. In einer weiteren Zahngruppe sind drei ungeschränkte Führungszähne und zwei geschränkte Folgezähne vereinigt, wobei die wirksamen Schneiden bzw. Schneidenabschnitte der Führungszähne durch Phasen an dem ersten und zweiten Führungszahn auf die drei Führungszähne aufgeteilt sind. Auch sind die Führungszähne in der Höhe abnehmend gestuft, ebenso wie die sich anschließenden geschränkten Folgezähne. Sämtliche Führungszähne weisen eine Breite auf, die die Breite des Grundkörpers des Sägeblatts nicht überschreiten. Daher sind auch immer geschränkte Folgezähne vorgesehen. Es wird jedoch in der DE-OS 36 11 063 auch ein Ausführungsbeispiel beschrieben, bei dem keine geschränkten Zähne, sondern nur ungeschränkte Zähne, in der Zahngruppe bzw. im sich wiederholenden Zyklus vorgesehen sind. Von einem solchen Sägeblatt geht die vorliegende Erfindung aus. Einem Führungszahn, der auch gefast sein kann, sind zwei Folgezähne nachgeordnet, wobei sich eine von Zahn zu Zahn abnehmende Höhe und eine von Zahn zu Zahn zunehmende Breite in der Gruppe ergibt Samtliche Zähne sind symmetrisch zu einer Längsmittelebene durch den Grundkörper ausgebildet Der erste Zahn in der Zahngruppe besitzt eine Schneide, die geradlinig durchgehend ausgebildet ist, wobei sich diese Schneide senkrecht zu der Längsmittelebene des Sägeblatts erstreckt. Dieser erste Zahn stimmt in seiner Breite mit der Breite des Grundkörpers überein. Die beiden Folgezähne besitzen ebenfalls geradlinig senkrecht zu der Längsmittelebene durchgehende Schneiden, von denen jedoch jeweils nur äußere Teile wirksam sind. Die Folgezähne besitzen unterschiedliche Flankenwinkel und der eingeschlossene Winkel zwischen Flanke und Schneide ist zwar an den einzelnen Folgezähnen unterschiedlich, jedoch immer als spitzer Winkel ausgebildet.

Die wirksame Schnittkante nimmt in ihrer Länge von Zahn zu Zahn in der Gruppe ab, so daß die wesentliche Schnittarbeit von dem Führungszahn zu leisten ist und die beiden Folgezähne im wesentlichen nur eine Verbreiterung des Schnittkanals bewirken, damit ein Freischnitt erreicht wird. Dieses Ausführungsbeispiel eines Sägeblatts soll in Funktion und Wirkung mit den Ausführungsbeispielen übereinstimmen, bei denen geschränkte Zähne zum Einsatz kommen. Ein solches Sägeblatt, bei dem die Zähne symmetrisch zu einer Längsmittelebene durch den Grundkörper ausgebildet sind, wobei nur ungeschränkte Zähne Verwendung finden, ist äußerst aufwendig in der Herstellung, wobei es offenbleibt, wie die im Vergleich zur Breite des Grundkörpers größere Breite der Folgezähne überhaupt erreichbar ist. Darüberhinaus besitzt diese Ausführungsform mit den ungeschränkten Zähnen auch zahlreiche andere Nachteile. Der wirksame Teil der Schnittkante an den Folgezähnen schließt mit der Flanke jeweils einen spitzen Winkel ein, also einen Winkel, der kleiner als 90° ist, so daß diese seitlichen Zahnspitzen bei Erbringung der Schnittarbeit einem Verschleiß unterliegen, durch den sich die Breite des Schnittkanals rapide verringert. Dieser Nachteil tritt an den geschränkten Zähnen in nicht so großem Maß zutage, da hier der Winkel zwischen wirksamer Schnittkante und Flanke etwa 90° beträgt. Geschränkte Folgezähne sind immer ungünstig für den Geradeauslauf eines Sägeblatts, weil an ihnen Seitenkräfte entstehen, also Kräfte, die einseitig einwirkend zu einer Auslenkung des betreffenden geschränkten Zahns führen. Dies wirkt sich nicht nur hinsichtlich einer schlechteren Oberflächengüte an der geschnittenen Fläche im Schnittkanal aus, sondern bildet zugleich eine Schwingungsanregung für das Sägeblatt. Der ungeschränkte Führungszahn besitzt keinen seitlichen Freiwinkel, so daß er im Bereich seiner Flanken im Führungskanal reibt. Der Führungszahn muß die Hauptschnittarbeit erbringen und dabei den größten Querschnitt ausräumen. Dies gilt auch für mehrere Führungszähne innerhalb einer Zahngruppe; in allen Fällen sind die geschränkten Zähne weniger belastet.

Durch die abwechselnde Anordnung von geschränkten Zähnen besteht die Gefahr, daß die Außenecken der seitlich nach rechts geschränkten Zähne zu den Außenecken der seitlich nach links geschränkten Zähne einen unterschiedlichen Verschleiß aufweisen. Dieser Verschleiß ist die Ursache bzw. der Beginn einer Neigung des Sägeblatts zum seitlichen Verlaufen.

Aus der EP-A-0 266 022 ist weiterhin ein Sägeblatt in der Ausbildung als Bandsägeblatt bekannt, bei dem in der Nachbildung eines Vor- und eines Nachschneiders an Kreissägeblättern die wirksame Schnittkante über die Schnittkanaibreite auf den Vor- und Nachschneider aufgeteilt ist. Der Vorschneider besitzt eine größere Zahnhöhe als der Nachschneider. Der Nachschneider besitzt jedoch eine größere Zahnbreite als der Vorschneider. Die wirksamen Teile, also die schneidenden Teile der jeweils vorgesehenen Zahnschneide, ist an Vor- und Nachschneider durch eine abknickende Schnittkante gebildet, wobei außen jeweils eine Phase vorgesehen ist, die zum Grundkörper hin geneigt ist. Vor- und Nachschneider in der Zahngruppe weisen zwischen Phase und Flanke einen Winkel auf, der größer als 90° ausgebildet ist. Damit ist der Nachschneider im Bereich seiner die Seitenwandung des Schnittkanals schneidenden Ecken zwischen Phase und Flanke weniger verschleißempfindlich als bei spitzwinkliger Gestaltung. Diese Ausbildung ist jedoch auf zwei Zähne in der Gruppe als Vor- und Nachschneider beschränkt und zielt durch die geringe Anzahl von Zähnen in der Gruppe darauf ab, möglichst dünne Späne beim Schneiden abzunehmen.

Der Erfindung liegt die Aufgabe zugrunde, ein Sägeblatt der eingangs beschriebenen Art bereitzustellen, welches einerseits eine Standzeiterhöhung bei guter Oberflächengüte des geschnittenen werkstüdes erbringt und bei dem andererseits sich ein stabilisierter Geradlauf ohne die Gefahr des seitlichen Verlaufens des Bands ergibt.

Erfindungsgemäß wird dies bei dem Sägeblatt der eingangs beschriebenen Art durch die Merkmale des Anspruchs 1 erreicht. Die wirksamen Schneiden bzw. Schneidenabschnitte sämtlicher Zähne sind jeweils von einer abknickenden Schnittkante gebildet, deren innerer Abschnitt etwa senkrecht zur Längsmittelebene verläuft und an den sich nach außen eine zum Grundkörper hin geneigte Phase anschließt. Der breiteste Zahn in der Zahngruppe weist zwischen Phase und Flanke einen Winkel größer 90° auf. An dem Sägeblatt gibt es somit keine geschränkten Zähne, sondern nur ungeschränkte, symmetrisch zu der Längsmittelebene durch den Grundkorper ausgebildete Zähne. Obwohl diese Zähne in gewisser Weise "ähnlich" sind, ergibt sich durch die gruppenweise vorgenommene Höhen- und Breitenstufung eine Ausräumung des Schnittkanals in einzelnen Spänen an den einzelnen Zähnen. Die Anzahl der Zähne pro Gruppe sollte mindestens drei, besser vier und mehr Zähne betragen. Damit zielt die Zahnfolge in der Gruppe nicht so sehr auf die Verwirklichung eines Führungszahns und Folgezähnen hin, sondern die einzelnen Zähne in der Gruppe sind hinsichtlich der zu erbringenden Schnittarbeit als gleichwertig anzusehen, dergestalt, daß sämtliche Zähne auch etwa in gleicher Weise belastet werden. Die Aufteilung der wirksamen Schnittkantenabschnitte auf die einzelnen Schneiden dient nicht dem Ziel, möglichst dünne Späne auszuräumen, sondern die größere Anzahl von Zähnen in der Zahngruppe deutet auf das Gegenteil hin, nämlich Späne mit vergleichsweise vergrößerter Dicke auszuräumen, so daß ein Verschleiß an der wirksamen Schnittkante sich nicht so nachteilig auswirkt wie bei extrem dünnen Spänen. Besonders wichtig ist es, daß an sämtlichen Zähnen die wirksame Schneide von einer abknickenden Schnittkante jeweils gebildet wird - im Gegensatz zu einer durchgehenden wirksamen Schnittkante in gerader Linie -, so daß jeder von dem wirksamen Teil einer Schnittkante ausgeräumte Span beim Ausräumen einer in zwei unterschiedlichen Richtung auf ihn einwirkenden Verformung unterliegt und somit einen spanbrechenden Effekt bewirkt. Die Verwirklichung von Phasen an allen Zähnen in symmetrischer Anordnung zur Längsmittelebene dient darüberhinaus noch einer Stabilisierung des Geradeauslaufs des Sägeblatts. Es wird hier eine stabilisierende Keilwirkung durch gleichmäßige Abstützung der Zähne im Schnittkanal erreicht dergestalt, daß es keinen Zahn gibt, auf den eine resultierende Seitenkraft ausgeübt wird. Zwar werden an allen Zähnen Seitenkräfte erzeugt Durch die symmetrische Ausbildung der Phasen jedoch heben sich beide Seitenkräfte an jedem Zahn gegeneinander auf, da diese Kräfte gegeneinander gerichtet sind. Einerseits werden damit bewußt Seitenkräfte zur Stabilisierung des Geradeauslaufs hervorgerufen und ausgenutzt. Andererseits werden diese Seitenkräfte immer so erzeugt, daß sie sich gegenseitig hinsichtlich einer seitlichen Kraftkomponente, die Anlaß für ein seitliches Verlaufen des Blattes oder Bandes sein könnte, aufheben. Der abknickende Verlauf der wirksamen Schnittkante wirkt auch als Spanbrecher und unterteilt die auszuräumende Schnittkanalfläche in einzelne, streifenförmige Flächen, deren Anzahl doppelt so groß ist wie die Anzahl der Zähne in der Gruppe. Von besonderer Bedeutung ist weiterhin die Verwirklichung eines Winkels größer als 90°, besser noch größer als 100°, zwischen Phase und Flanke zumindest an dem breitesten Zahn in der Zahngruppe. Es ist letztlich diese äußere Kante, die die Seitenwand des Schnittkanals bearbeitet und die Oberflächengüte bestimmt. Da hier der Winkel zwischen Flanke und Phase insbesondere nennenswert größer als 90° ausgebildet ist, wirkt sich ein auch hier auftretender, unvermeidlicher Verschleiß am breitesten Zahn der Zahngruppe weniger nachteilig aus als bei spitzwinkliger Gestaltung. Der Schnittkanal wird mitzunehmendem Verschleiß vergleichsweise weniger eingeengt und es ergeben sich damit längere Standzeiten. Außerdem bewirkt die stumpfwinklige Geometrie eine höhere Stabilität gegen das Ausbrechen der Schneidenecken, was vor allem bei der Verwendung von Hartschneidstoffen von besonderer Wichtigkeit ist.

Es sei darauf hingewiesen, daß sich die Erfindung zunächst bei Anwendung einer konstanten Teilung verwirklichen läßt. Bereits dabei erbringt die Höhenabstufung und die Breitenabstufung der Zähne in der Gruppe trotz der Ähnlichkeit in der Formgebung der Zähne eine verminderte Empfindlichkeit gegen Schwingungen und eine hervorragenden Geradeauslauf des stabilisierten Bandes. Von besonderer Bedeutung ist es jedoch, was die Erfindung ohne Weiteres zuläßt, die beschriebene Ausbildung auch in Kombination mit einer variablen Teilung einzusetzen. Wenn dies geschieht, kann bzw. muß zwischen gleichen oder auch unterschiedlichen Zähnezahlen in jeder Gruppe unterschieden werden. Eine erste Art Gruppe ist dabei durch die Höhen- und Breitenstufung gekennzeichnet. Eine zweite Gruppe kann durch die Anzahl der sich hinsichtlich der Teilung wiederholenden Zähne bei variabler Teilung unterschieden werden. Die Anzahl in diesen beiden Gruppen von Zähnen kann zueinander kleiner, gleich oder größer sein. Wenn die Anzahl der Teilungen in der Teilungsgruppe nicht mit der Anzahl der Zähne in der durch die Höhen- und Breitenstufung festgelegten Gruppe übereinstimmt, ergeben sich vorteilhaft sehr große Zähnezahlen hinsichtlich des sich wiederholenden Zyklusses von Zähnen am Sägeblatt. Wenn hinsichtlich der Höhenabstufung (und der Breitenabstufung) die Anzahl der Zähne in der sodefinierten Zahngruppe beispielsweise vier beträgt und die Anzahl der Zähne bis zu einer sich wiederholenden Teilung innerhalb einer variablen Teilungsfolge beispielsweise neun beträgt, dann weist der Zyklus von Zähnen 36 Zähne auf, d. h. erst der 37. Zahn im Zyklus stellt eine Wiederholung des ersten Zahns im Zyklus dar.

Die Länge der wirksamen Schnittkanten an sämtlichen Zähnen ist etwa gleich groß. Damit wird in Verbindung mit einer gleichmäßigen Höhenstufung der Zähne in der Gruppe eine etwa gleichmäßige Belastung jedes Zahns erreicht. In Verbindung mit einer Anzahl von Zähnen in der Gruppe, die mindestens drei, besser jedoch vier und mehr beträgt, zielt die Erfindung damit im Gegensatz zum Stand der Technik nicht darauf ab, möglichst dünne Späne, sondern Späne vergleichsweise größerer Dicke von dem Werkstoff abzunehmen, die sich durch die jeweils abknickende wirksame Schnittkante zusätzlich aufteilen. Die absolute Länge der wirksamen Schnittkante ist an sämtlichen Zähnen etwa gleich groß.

Die Phasen an sämtlichen Zähnen können in einem gleichgroßen Phasenwinkel zu einer Geraden senkrecht zu der Längsmittelebene des Grundkörpers angeordnet sein. Damit verlaufen die Phasen parallel zueinander, und zwar jeweils auf der linken und auf der rechten Seite des Zahns, bedingt durch die symmetrische Ausbildung zur Längsmittelebene durch den Grundkörper. Bei gleichmäßiger Höhenstufung ergibt sich in der Projektion ein gleichmäßiger Abstand von Phase zu Phase, wenn der Punkt, in welchem die Schnittkante abknickt, entsprechend gewählt wird. Beachtet man die wirksamen Flächenanteile, dann kann die Auslegung so getroffen werden, daß gleiche Flächenanteile auf sämtliche Zähne verteilt werden. Es ist aber auch möglich, selbst bei Einhaltung gleicher Phasenwinkel in der Projektion unterschiedliche Abstände zwischen den Phasen zu verwirklichen. Andererseits müssen die Phasenwinkel nicht unbedingt übereinstimmen. Die Anzahl der Knickpunkte in einem wirksamen, abknickenden Schnittkantenabschnitt kann größer als 1 sein.

Insbesondere kann die Länge des von der Phase gebildeten Teils der wirksamen, geknickt verlaufenden Schnittkante größer oder etwa gleich dem etwa senkrecht zu der Längsmittelebene verlaufenden Teil der wirksamen Schnittkante sein. Damit wird die Breite des von einer wirksamen abknickenden Schnittkante ausgeräumten Materials festgelegt, und zwar hinsichtlich seiner unterschiedlichen Abknickpunkte.

Als besonders zweckmäßig hat es sich erwiesen, wenn die Phasen in einem Phasenwinkel im Bereich zwischen 20 und 60° - vorzugsweise etwa 45° - vorgesehen sind. Damit wird die zur Stabilisierung des Geradeauslaufs wichtige Keilabstützung jedes Zahns am Grund des Schnittkanals verwirklicht Der Phasenwinkel darf nicht zu Mein gewählt werden, damit eine nennenswerte stabilisierende Wirkung eintritt. Andererseits darf der Phasenwinkel nicht zu groß gewählt werden, damit eine Einklemmwirkung des Sägeblatts im Schnittkanal vermieden wird. Ein Phasenwinkel in der Größenordnung von 45° hat sich dabei als besonders geeignet erwiesen. Der Phasenwinkel bestimmt zugleich den Winkel, um den die beiden Anteile jedes ausgeräumten Spans gegeneinander kraftmäßig beaufschlagt werden.

Die Flanken sämtlicher Zähne sind in einem Flankenwinkel im Bereich zwischen 3 und 12°, insbesondere 8°, vorgesehen. Ein kleiner Flankenwinkel in Verbindung mit einem großen Phasenwinkel ergibt eine sehr stabile Ausbildung der freien Ecken des jeweiligen Zahns, die damit stumpfwinklig ausgebildet sind und sich weniger anfällig gegenüber Verschleiß erweisen. Es versteht sich, daß nur die beiden Ecken des breitesten Zahns, also des letzten Zahns in der Zahngruppe der Breitenstufung, eine Schnittarbeit leistet. Die Flankenwinkel der einzelnen Zähne in der Zahngruppe können durchaus unterschiedlich gewählt werden, wobei der Flankenwinkel des breitesten Zahns von besonderer Bedeutung ist. Dabei muß der breiteste Zahn breiter als die Breite des Grundkörpers des Sägeblatts sein.

Es ist aber auch möglich, daß die Flanken sämtlicher Zähne in einem übereinstimmenden Flankenwinkel mit sich deckender Projektion vorgesehen sind. Dies vereinfacht die Herstellung erheblich, indem die Flanken sämtlicher Zähne mit einer konstanten Maschineneinstellung, z. B. durch Schleifen, bearbeitet werden können.

Die Schneiden können an hartmetallbestückten, geschliffenen Zähnen vorgesehen sein und sämtliche Zähne können dabei eine größere Breite als der Grundkörper aufweisen. In Verbindung mit dem Phasenwinkel tritt dann auch eine Breitenstufung ein. Die Zähne sind damit insgesamt großflächig ausgebildet und damit voll belastbar. In der Regel werden die Zähne bzw. wesentliche Teile davon durch Hartmetallbestückung und durch Schleifen erstellt Zuvor wird der Bandstreifen des Qrundkörpers durch einen Fräsvorgang entsprechend vorbereitet Es ist aber auch möglich, einen einseitig konisch erweiternd gewalzten Bimetallstreifen als Material einzusetzen und die Zähne bzw. Schneiden durch einen kombinierten Fräs/Schleifvorgang zu bilden.

Die Zähne in den Zahngruppen können eine lineare Höhen- und Breitenstufung aufweisen. Dies trägt zur gleichmäßigen Belastung der Zähne bei.

Im sich wiederholenden Zyklus der Zähne können Gruppen gebildet sein, die sich wiederholende variable Teilungen aufweisen. Dabei muß die Anzahl der Zähne in der Teilungsgruppe nicht unbedingt mit der Anzahl der Zähne in der Breiten/Höhen-Gruppe übereinstimmen. Bei einer Teilungsgruppe mit fünf Teilungen und einer Höhengruppe mit vier unterschiedlichen Höhen beträgt die Anzahl der Zähne im Zyklus zwanzig. Die Anzahl der Zähne im Zyklus ergibt sich als kleinstes gemeinsames Vielfaches der Anzahl der Zähne in den beiden Gruppen. Durch diese hohe Zahl der Zähne im Zyklus ist das Sägeblatt vergleichsweise unempfindlich gegenüber Schwingungsanregungen. Es besitzt eine große Laufruhe mit stabilisiertem Geradeauslauf und die Standzeiten sind gegenüber herkömmlichen Sägeblättern verbessert.

Die Erfindung wird anhand einiger Ausführungsbeispiele weiter erläutert und beschrieben. Es zeigen:

Figur 1      eine Seitenansicht auf einen Ausschnitt aus einem Sägeblatt in vergrößernder Darstellung,

Figur 2      eine Draufsicht auf das Sägeblatt gemäß Figur 1,

Figur 3      eine Ansicht in Richtung der Linie III-III in Figur 1 an einem Bandsägeblatt mit vier Zähnen in der Gruppe,

Figur 4      eine ähnliche Darstellung wie Figur 3, jedoch an einem anderen Ausführungsbeispiel eines Bandsägeblatts,

Figur 5      eine ähnliche Darstellung wie Figur 3, jedoch an einem weiteren Ausführungsbeispiel,

Figur 6      eine ähnliche Darstellung wie Figur 3, jedoch an einem weiteren Ausführungsbeispiel und

Figur 7      eine Seitenansicht auf ein Bandsägeblatt mit variabler Teilung.

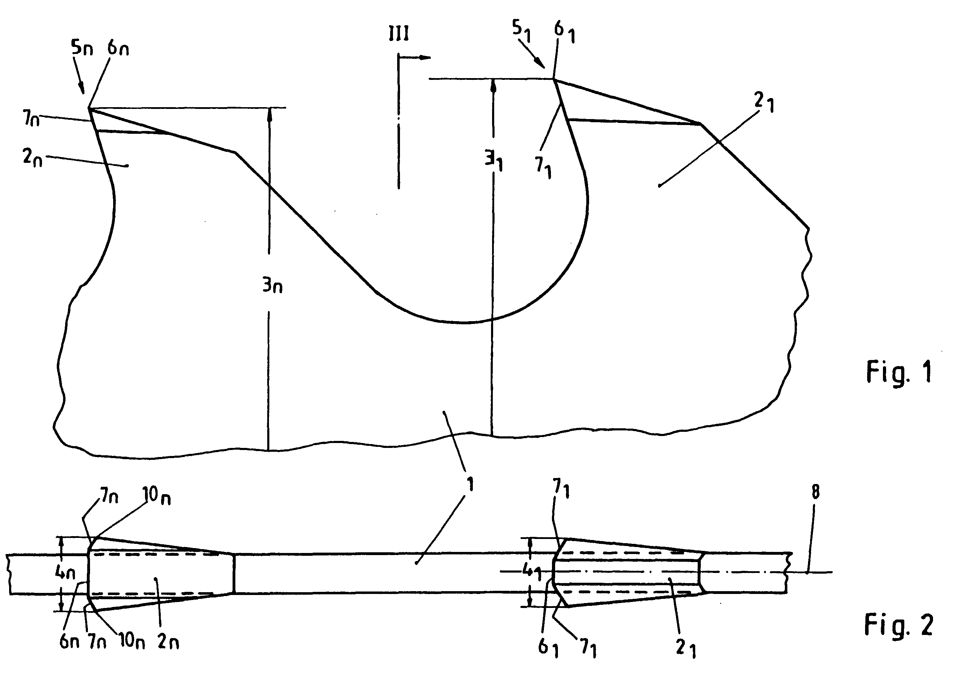

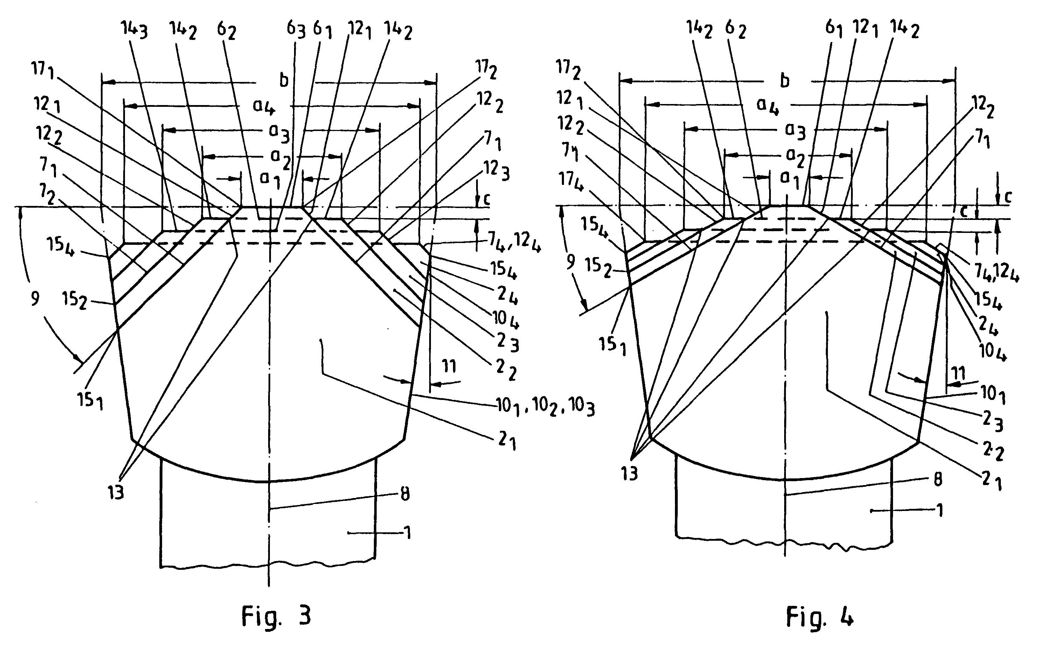

Das in Figur 1 in einem Ausschnitt verdeutlichte Bandsägeblatt weist einen Grundkörper 1 mit ungeschränkten Zähnen 2 auf, die in sich wiederholenden Zyklen vorgesehen sind. Jeder Zyklus besteht aus einer Anzahl von Zähnen, wobei zunächst einmal zur Vereinfachung angenommen sein soll, daß die Anzahl der Zähne pro Zyklus und die Anzahl der Zähne pro Gruppe übereinstimmen soll, wie dies bei konstanter Teilung der Fall ist. Der erste Zahn $2_1$ einer solchen Gruppe oder eines solchen Zyklusses ist mit dem Index 1 gekennzeichnet, während der letzte Zahn einer solchen Gruppe oder eines solchen Zyldusses mit dem Index n gekennzeichnet ist Die Anzahl der Zähne je Gruppe bzw. Zyklus beträgtmindestens drei, besser vier und mehr. Jeder Zahn weist eine Höhe 3 auf, wobei auch hierwiederum diebeschriebene Indexierung vorgenommen worden ist Die Zähne 2 in der Gruppe besitzen eine Höhenstufung in der Weise, daß die Höhe von Zahn zu Zahn abnimmt Die Höhe $3_1$ des ersten Zahns ist somit größer als die Höhe des zweiten, folgenden Zahns, die Höhe des zweiten Zahns ist wiederum größer als die Höhe des dritten Zahns usw. Der letzte Zahn in einer Gruppe besitzt damit die geringste Höhe $3_n$. Die Zähne 2 weisen auch unterschiedliche Breiten 4 auf, wobei auch hier eine Breitenstufung in der Weise vorgesehen ist, daß der erste Zahn $2_1$ die geringste Breite, der letzte Zahn $2_n$ in einer Gruppe die größte Breite aufweist Jeder Zahn 2 besitzt eine abknickende Schnittkante 5, die von einem inneren Abschnitt 6 und je einer nach außen anschließenden Phase 7 gebildetwird. Der Abschnitt 6 verläuft hier senkrecht quer zu einer Längsmittelebene 8 durch den Grundkörper 1. Die Ausbildung jedes Zahns 2 ist symmetrisch zu der Längsmittelebene 8 ausgebildet, so daß die Phasen 7 rechts und links an jedem Zahn symmetrisch vorgesehen sind. Die Phasen 7 sind, wie insbesondere die Ansichten der Figuren 3 bis 6 zeigen, zu dem Grundkörper 1 hin geneigt angeordnet. Es ergibt sich ein Phasenwinkel 9, der in einem Bereich zwischen 20 und 60° - vorzugsweise etwa 45° - vorgesehen sein sollte. Der Phasenwinkel 9 ist der Winkel zwischen einer Richtung senkrecht zu der Längsmittelebene 8 und der Phase 7. Die Phasen 7 sind an den einzelnen Zähnen 2 in der Weise angebracht, daß die Phase des ersten und höchsten Zahns nur einen vergleichsweise kleinen Abschnitt $6_1$ aufweist, der eine geringere Länge besitzt als die Dicke des Grundkörpers, während an dem letzten Zahn einer Zahngruppe der gerade Abschnitt $6_n$ eine größere Abmessung aufweist, als es der Breite des Grundkörpers 1 entspricht

Die unterschiedliche Formgestaltung ist am einfachsten aus Figur 3 ersichtlich, in der ein Ausführungsbeispiel mit vier Zähnen 2 in der Gruppe dargestellt ist Man erkennt zunächst den höchsten Zahn $2_1$ in Draufsicht mit seinem geraden, relativ klein gestalteten Abschnitt $6_1$, der hier die Länge $a_1$ aufweist. An diesen geraden Abschnitt $6_1$ schließen sich am ersten Zahn $2_1$ die relativ lang ausgebildeten Phasen $7_1$ an, die im Phasenwinkel 9, hier 45°, vorgesehen sind. Die Phase $7_1$ erstreckt sich bis zur Flanke $10_1$ des Zahns $2_1$. Die Flanke 10 erweitert sich vom Grundkörper 1 in Richtung auf die Spitze jedes Zahns 2. Die Flanke 10 ist hier in einem Flankenwinkel 11 angeordnet, der an diesem Beispiel 8° beträgt Der Flankenwinkel 11 ist nicht indexiert, da die Flanken 10 sämtlicher Zähne in der Projektion zusammenfallen, also sämtliche Flanken 10 im gleichen Flankenwinkel 11 vorgesehen sind. Die Ausbildung der Flanken 10 erfolgt durch einen Schleifvorgang über sämtliche Zähne 2 der Gruppe hinweg. Der erste Zahn $2_1$ schneidet jedoch nur mit einem Teil seiner Schnittkante $5_1$, und zwar mit dem Teil, der über den Umriß des zweiten Zahns $2_2$ in der Projektion vorsteht. Der wirksame, also schneidende Teil der Schnittkante $5_1$ des ersten Zahns $2_1$ besteht aus dem geraden Abschnitt $6_1$ und dem sich anschließenden Abschnitt $12_1$ nach beiden Seiten. Die Abschnitte $12_1$ enden in dem Projektionsschnittpunkt 13.

Der zweithöchste Zahn $2_2$ weist einen geraden Abschnitt $6_2$ der Länge $a_2$ auf, an den sich wiederum Phasen $7_2$ nach beiden Seiten in symmetrischer Weise anschließen. Der Verlauf sämtlicher Phasen 7 an allen Zähnen 2 ist parallel zueinander. Auch von dem Zahn $2_2$ schneidet nur ein gewisser Teil, nämlich der Teil der Schnittkante $5_2$, der die Umrisse der anderen Zähne überragt. Dies sind die beiden senkrecht zur Längsmittelebene 8 verlaufenden Schneidenabschnitte $14_2$ des Abschnitts $6_2$ und die beiden jeweils anschließenden Abschnitte $12_2$ der Phasen $7_2$. Entsprechendes gilt für den dritten Zahn $2_3$ und den vierten Zahn $2_4$, der den letzten Zahn in der Zahngruppe darstellt. Beim letzten Zahn $2_4$ sind die Phasen $7_4$ identisch mit den Abschnitten $12_4$. Verlängert man die Flanken 10 in Richtung auf eine Linie, die die Verlängerung des Abschnitts $6_1$ darstellt, dann ergibt sich hier eine theoretische Breite b des Zahns $2_n$ bzw. $2_4$.

Man erkennt aus Figur 3, daß nur die beiden äußeren Ecken $15_4$ des letzten Zahns $2_4$ schneiden, während die Ecken $15_1$, $15_2$ usw. sich innerhalb des Schnittkanals bewegen und an einem Materialabtrag nicht beteiligt sind. Für die Standzeit und den unvermeidlichen Verschleiß an den Ecken $15_4$ ist es wesentlich, zu erkennen, daß der Winkel zwischen der Phase $7_4$ und der Flanke $10_4$ nicht spitzwinklig, sondern stumpfwinklig ausgebildet ist, also größer, vorzugsweise nennenswert größer, als 90° ausgebildet ist.

Man erkennt an Figur 3 die gleichmäßige Höhenstufung. So beträgt die Differenz c zwischen den Höhen benachbarter Zähne

$$c = 0,035 \times b.$$

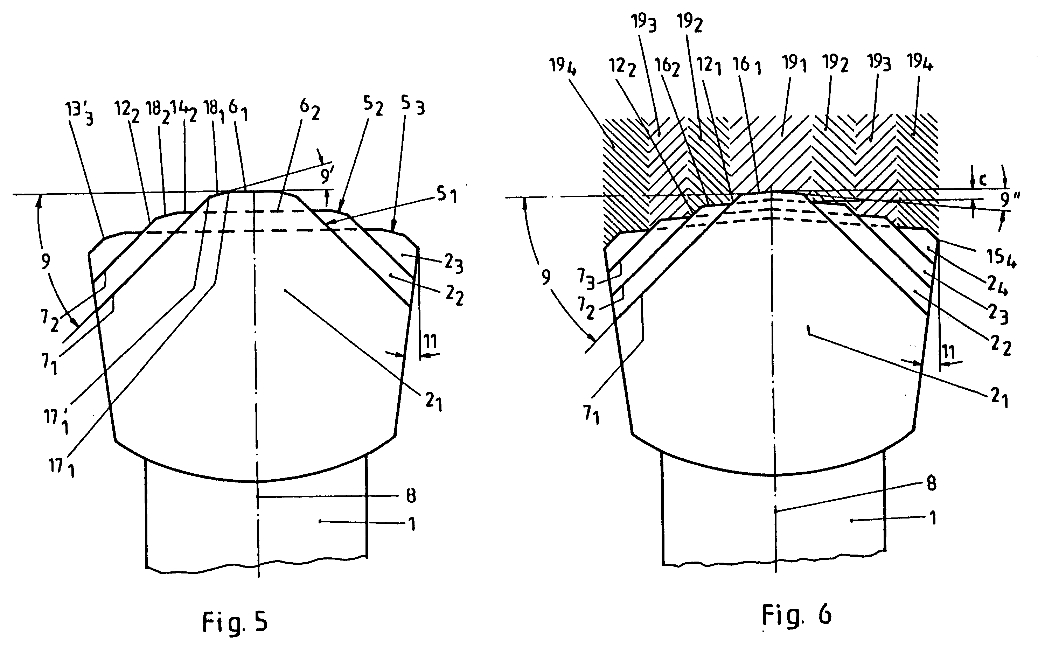

Bei einer Breite b von 1,8 mm ergibt sich für die Düferenz c 0,063 mm. Die Hohen- und Breitenstufung in Verbindung mit dem Phasenwinkel 9 ist nun so gewählt, daß von jedem Zahn der Zahngruppe streifenförmige Partien (Figur 6) aus dem Werkstück ausgeräumt werden, wobei die Breite der Streifen pro Zahn in etwa übereinstimmt, damit jeder Zahn 2 der Gruppe in etwa gleichmäßig betastet wird. Jeder einzelne Span, der mit einem Zahn der Zahngruppe ausgeräumt wird, wird im Bereich des Abknickpunkts $17_1$ der Schnittkante zwischen dem geraden Abschnitt $6_1$ und dem wirksamen Teil der Phase $7_1$ gleichsam nach zwei Richtungen gebogen, die unterschiedlich sind. Dies trägt dazu bei, den einzelnen Span gleichsam noch einmal aufzuspalten bzw. während der Abnahme in Teile zu zerlegen.

Das Ausführungsbeispiel der Figur 4 ist an sich ähnlich gestaltet wie das der Figur 3. Der Phasenwinkel 9 beträgt hier jedoch 30° und es sind auch hier vier Zähne 2 in der Gruppe vorgesehen. Es sei weiterhin angenommen, daß eine konstante Teilung Anwendung findet, so daß auch die Zähnezahl im Zyklus vier beträgt. Die Höhenstufung und die Breitenstufung ist gleichmäßig durchgeführt.

Figur 5 zeigt eine weitere Ausführungsform, bei der in der Gruppe jedoch nur drei Zähne 2 vorgesehen sind. Der Phasenwinkel 9 beträgt 45° und der Flankenwinkel 11 ist mit 8° gewählt Die Schnittkanten 5 sind hier jedoch nicht aus zwei gerade verlaufenden Abschnitten, sondern aus drei gerade verlaufenden Abschnitten, also mit zwei Abknickpunkten $17_1$ und $17'_1$ zusammengesetzt. Für den ersten und damit höchsten Zahn $2_1$ ergibt sich ein gerader Abschnitt $6_1$, an den sich in einem Phasenwinkel 9' ein erster Phasenabschnitt $18_1$ und dann die Phase $7_1$ anschließen. Die Phase $7_1$ ist im Phasenwinkel 9 vorgesehen. Der zweite Zahn $2_2$ besitzt einen geraden Schneidenabschnitt $14_2$, einen ersten Phasenabschnitt $18_2$ und eine zweite Phase $7_2$. Man erkennt, daß der gesamte Phasenabschnitt $18_2$ im Bereich des wirksamen Teils der Schnittkante des Zahns $2_2$ liegt, während von der Phase $7_2$ wiederum nur der Abschnitt $12_2$ der Phase $7_2$ schneidend wirksam ist Auch der dritte Zahn $2_3$ ist in der beschriebenen Weise ausgebildet und vorgesehen. Im allgemeinen ist, ein einzigen Abknickpunkt 17 oder allenfalls zwei Abknickpunkte vorzusehen, wie dies anhand der Figuren 3 und 4 einerseits und Figur 5 andererseits erläutert wurde.

Figur 6 zeigt ein weiteres Ausführungsbeispiel, welches im wesentlichen mit den vorher beschriebenen Ausführungsbeispielen übereinstimmen kann. Die Anzahl der Zähne 2 in der Gruppe beträgt hier wieder vier. Es gibt jedoch keine gerade, d. h. senkrecht zu der Längsmittelebene 8 verlaufende Abschnitte 6, sondern stattdessen sind um einen Winkel 9", leicht pfeilförmig schräggestellte Abschnitte 16 vorgesehen. Die von jedem Zahn im Schnittkanal ausgeräumten Streifen $19_1$, $19_2$, $19_3$ und $19_4$ sind schraffiert angedeutet.

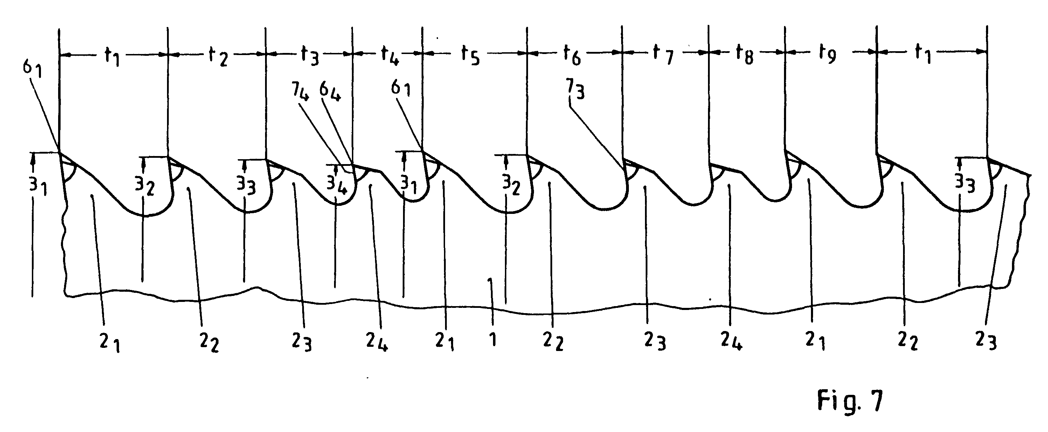

Figur 7 verdeutlicht die Überlagerung der Höhen- und Breitenstufung mit einer variablen Teilung. Zur vereinfachten Verdeutlichung sei auch hier wieder angenommen, daß es hinsichtich der Höhenstufung Zahngruppen aus vier Zähnen gibt, die sich in der angegebenen Reihenfolge wiederholen und so vorgesehen sind. Die Anzahl der Zähne in'der nach der Höhe festgelegten Gruppe beträgt also vier. Gleichzeitig ist eine variable Teilung mit neun Teilungen $t_1 \ldots t_9$ dargestellt, so daß in einer nach der Teilung t bestimmten Zahngruppe die Anzahl der Zähne in einer solchen Teilungsgruppe neun beträgt Die Form der Zähne hinsichtlich der Anbringung der Schnittkanten 5, der Abschnitte 6 und der Phasen 7 ist hier genauso, wie es an den vorangehenden Ausführungsbeispielen beschrieben wurde. Damit entsteht jedoch ein Zyklus von sich wiederholenden Zähnen, der dem kleinsten gemeinsamen Vielfachen, also 4 x 9 = 36, entspricht. Der Zyklus weist 36 Zähne auf. Erst der 37. Zahn entspricht dem ersten Zahn hinsichtlich seiner Ausbildung, seiner Höhe und seiner zugeordneten Teilung. Zur Verdeutlichung seien die Teilungen und die Höhen der einzelnen Zähne in der folgenden Tabelle angegeben:

| n | 1 | 2 | 3 | 4 | 5 | 6 | 7 | 8 | 9 |
|---|---|---|---|---|---|---|---|---|---|
| t<br>3 3 | 12,70<br>34 | 11.65<br>34-c | 9,50<br>34-2c | 8,45<br>34-3c | 12,15<br>34 | 11,10<br>34-c | 10,00<br>34-2c | 8.90<br>34-3c | 10,45<br>34. |

_**Bezugszeichenliste:**_

1 = Grundkörper
2 = Zahn
3 = Höhe
4 = Breite
5 = Schnittkante
6 = Abschnitt
7 = Phase
8 = Längsmittelebene
9 = Phasenwinkel
10 = Flanke
11 = Flankenwinkel
12 = Abschnitt
13 = Projektionsschnittpunkt
14 = Schneidenabschnitt
15 = Ecke
16 = Abschnitt
17 = Abknickpunkt
18 = Phasenabschnitt
19 = Streifen

**Patentansprüche**

1. Sägeblatt mit einem Grundkörper (1) und ungeschränkten Zähnen ($2_1$, $2_2$, $2_3$) usw.) mit Schneiden, die in sich wiederholenden Zyklen vorgesehen sind und jeder Zyklus mindestens eine aus mindestens drei Zähnen bestehende Zahngruppe mit von Zahn zu Zahn abnehmender Höhe (3) und dabei zunehmender Breite (4) aufweist, wobei alle Zähne ($2_1$, $2_2$, $2_3$ usw.) symmetrisch zu einer Längsmittelebene (8) durch den Grundkörper ausgebildet sind, **dadurch gekennzeichnet, dass** die wirksamen Schneiden bzw. Schneidenabschnitte ($6_1$, $12_1$; $14_2$, $12_2$; $14_3$, $12_3$ usw.) sämtlicher Zähne ($2_1$, $2_2$, $2_3$ usw.) jeweils von einer abknickenden Schnittkante ($5_1$, $5_2$, $5_3$ usw.) gebildet sind, deren innerer Abschnitt ($6_1$, $6_2$, $6_3$ usw.) etwa senkrecht zur Längsmittelebene (8) verläuft und an den sich nach außen eine zum Grundkörper (1) hin geneigte Phase ($7_1$, $7_2$, $7_3$ usw.) anschließt, dass der breiteste Zahn ($2_n$) in der Zahngruppe zwischen Phase ($7_n$) und Flanke ($10_n$) einen Winkel größer 90° aufweist, dass die Länge der wirksamen Schnittkanten ($6_1$, $12_1$; $14_2$, $12_2$, $14_3$, $12_3$ usw.) an sämtlichen Zähnen ($2_1$, $2_2$, $2_3$ usw.) etwa gleich groß ist, und daß die Flanken ($10_1$, $10_2$, $10_3$ usw.) der Zähne ($2_1$, $2_2$, $2_3$ usw.) in einem Flankenwinkel ($11_1$, $11_2$, $11_3$ usw.) im Bereich zwischen 3° und 12° vorgesehen sind.

2. Sägeblatt nach Anspruch 1, **dadurch gekennzeichnet, dass** die Phasen ($7_1$, $7_2$, $7_3$ usw.) an sämtlichen Zähnen ($2_1$, $2_2$, $2_3$ usw.) in einem gleich großen Phasenwinkel (9) zu einer Geraden, senkrecht zu der Längsmittelebene (8) des Grundkörpers (1) angeordnet sind.

3. Sägeblatt nach Anspruch 1 oder 2, **dadurch gekennzeichnet, dass** die Länge des von der Phase ($7_1$, $7_2$, usw.) gebildeten Teils ($12_1$, $12_2$ usw.) der wirksamen, geknickt verlaufenden Schnittkante ($5_1$, $5_2$ usw.) größer oder etwa gleich dem etwa senkrecht zu der Längsmittelebene (8) verlaufenden Teil ($6_1$, $14_2$, $14_3$ usw.) der wirksamen Schnitt-

kante ist.

**4.** Sägeblatt nach einem oder mehreren der Ansprüche 1 bis 3, **dadurch gekennzeichnet, dass** die Phasen ($7_1$, $7_2$, $7_3$ usw.) in einem Phasenwinkel (9) im Bereich zwischen 20° und 60° - vorzugsweise etwa 45° - vorgesehen sind.

**5.** Sägeblatt nach einem oder mehreren der Ansprüche 1 bis 4, **dadurch gekennzeichnet, dass** die Flanken ($10_1$, $10_2$, $10_3$ usw.) sämtlicher Zähne ($2_1$, $2_2$, $2_3$ usw.) in einem Flankenwinkel ($11_1$, $11_2$, $11_3$ usw.) von 8° vorgesehen sind.

**6.** Sägeblatt nach Anspruch 1, **dadurch gekennzeichnet, dass** die Flanken ($10_1$, $10_2$, $10_3$ usw.) sämtlicher Zähne ($2_1$, $2_2$, $2_3$ usw.) in einem übereinstimmenden Flankenwinkel (11) mit sich deckender Projektion vorgesehen sind.

**7.** Sägeblatt nach einem oder mehreren der Ansprüche 1 bis 6, **dadurch gekennzeichnet, dass** die Schneiden an hartmetallbestückten, geschliffenen Zähnen vorgesehen sind und sämtliche Zähne ($2_1$, $2_2$, $2_3$ usw.) eine größere Breite als der Grundkörper (1) aufweisen.

**8.** Sägeblatt nach einem oder mehreren der Ansprüche 1 bis 7, **dadurch gekennzeichnet, dass** die Zähne ($2_1$, $2_2$, $2_3$ usw.) in den Zahngruppen eine lineare Höhen- und Breitenstufung aufweisen.

**9.** Sägeblatt nach einem oder mehreren der Ansprüche 1 bis 8, **dadurch gekennzeichnet, dass** im sich wiederholenden Zyklus der Zähne Gruppen gebildet sind, die sich wiederholende, variable Teilungen ($t_1$, $t_2$, $t_3$ usw.) aufweisen.

**Claims**

**1.** A saw blade having a basic body (1) and unset teeth ($2_1$, $2_2$, $2_3$) with cutting edges which are provided in recurring cycles and each cycle has at least one group of at least three teeth with a height (3) decreasing from tooth to tooth and a width (4) at the same time increasing, the teeth being formed symmetrically with respect to a longitudinal center plane (8) through the basic body, **wherein** the effective cutting edges or cutting-edge sections ($6_1$, $12_1$; $14_2$, $12_2$; $14_3$, $12_3$ etc.) of all the teeth ($2_1$, $2_2$, $2_3$ etc.) are in each case formed by a jutting-out cutting edge ($5_1$, $5_2$, $5_3$ etc.), the inner section ($6_1$, $6_2$, $6_3$ etc.) of which runs approximately perpendicularly with respect to the longitudinal center plane (8) and which is adjoined externally by a phase ($7_1$, $7_2$, $7_3$ etc.) inclined toward the basic body (1), and wherein the widest tooth ($2_n$) in the group of teeth has an angle greater than 90° between phase ($7_n$) and flank ($10_n$), and wherein the length of the effective cutting edges ($6_1$, $12_1$; $14_2$, $12_3$, $14_3$, $12_3$ etc.) is approximately equal on all the teeth, and wherein the flanks ($10_1$, $10_2$, $10_3$ etc.) of all the teeth ($2_1$, $2_2$, $2_3$ etc.) are provided at a flank angle ($11_1$, $11_2$, $11_3$ etc.) in the range between 3 and 12°.

**2.** The saw blade as claimed in claim 1, **wherein** the phases ($7_1$, $7_2$, $7_3$ etc.) on all the teeth ($2_1$, $2_2$, $2_3$ etc.) are arranged at an equal phase angle (9) with respect to a straight line perpendicular to the longitudinal center plane (8) of the basic body (1) .

**3.** The saw blade as claimed in claim 1 or 2, **wherein** the length of the part ($12_1$, $12_2$ etc.) of the effective, jutting cutting edge ($5_1$, $5_2$ etc.) formed by the phase ($7_1$, $7_2$ etc.) is greater than or approximately equal to the part ($6_1$, $14_2$, $14_3$ etc.) of the effective cutting edge running approximately perpendicularly with respect to the longitudinal center plane (8).

**4.** The saw blade as claimed in one or more of claims 1 to 3, **wherein** the phases ($7_1$, $7_2$, $7_3$ etc.) are provided at a phase angle (9) in the range between 20 and 60° - preferably approximately 45°.

**5.** The saw blade as claimed in one or more of claims 1 to 4, **wherein** the flanks ($10_1$, $10_2$, $10_3$ etc.) of all the teeth ($2_1$, $2_2$, $2_3$ etc.) are provided at a flank angle ($11_1$, $11_2$, $11_3$ etc.) of 8°.

**6.** The saw blade as claimed in claim 1, **wherein** the flanks ($10_1$, $10_2$, $10_3$ etc.) of all the teeth ($2_1$, $2_2$, $2_3$ etc.) are provided at a coinciding flank angle (11) with congruent projection.

**7.** The saw blade as claimed in one or more of claims 1 to 6, **wherein** the cutting edges are provided on carbide-tipped, ground teeth and all the teeth ($2_1$, $2_2$, $2_3$ etc.) have a greater width than the basic body (1).

8. The saw blade as claimed in one or more of claims 1 to 7, **wherein** the teeth ($2_1$, $2_2$, $2_3$ etc.) in the groups of teeth have a linear height and width graduation.

9. The saw blade as claimed in one or more of claims 1 to 8, **wherein** groups which have recurring, variable pitches ($t_1$, $t_2$, $t_3$ etc.) are formed in the recurring cycle of teeth.

**Revendications**

1. Lame de scie avec un corps de base (1) et dents non avoyées ($2_1$, $2_2$, $2_3$, etc.) avec des tranchants qui sont prévus dans des cycles se renouvelant et chaque cycle comporte au moins un groupe de dents constitué de trois dents avec une hauteur (3) diminuant d'une dent à l'autre et une largeur (4) augmentant, toutes les dents ($2_1$, $2_2$, $2_3$, etc.) étant symétriques à un plan médian longitudinal (8) traversant le corps de base, **caractérisée en ce que** les tranchants utiles ou les parties de tranchant utiles ($6_1$, $12_1$ ; $14_2$, $12_2$ ; $14_3$, $12_3$, etc.) de toutes les dents ($2_1$, $2_2$, $2_3$, etc.) sont formés chacun par un bord de coupe ($5_1$, $5_2$, $5_3$, etc.) se puant, dont la portion intédeure ($6_1$, $6_2$, $6_3$, etc.) est à peu près perpendiculaire au plan médian longitudinal (8) et à laquelle fait suite vers l'extérieur un chanfrein ($7_1$, $7_2$, $7_3$, etc.) incliné vers le corps de base (1), que la dent la plus large ($2_n$) du groupe de dents, entre le chanfrein ($7_n$) et le flanc ($10_n$), présente un angle supérieur à 90°, **en ce que** la longueur des bords de coupe utile ($6_1$, $12_1$ ; $14_2$, $12_2$ ; $14_3$, $12_3$, etc.) est à peu près la même pour toutes les dents ($2_1$, $2_2$, $2_3$, etc.) et **en ce que** les flancs ($10_1$, $10_2$, $10_3$, etc.) des dents ($2_1$, $2_2$, $2_3$, etc.) sont prévus dans un angle de flanc ($11_1$, $11_2$, $11_3$, etc.), entre 3 et 12°.

2. Lame de scie selon la revendication 1, **caractérisée en ce que** les chanfreins ($7_1$, $7_2$, $7_3$, etc.) de toutes les dents ($2_1$, $2_2$, $2_3$, etc.), sont disposés suivant un même angle de chanfrein (9) par rapport à une droite, perpendiculaire an plan médian longitudinal (8) du corps de base (1).

3. Lame de scie selon la revendication 1 ou 2, **caractérisée en ce que** la longueur de la partie ($12_1$, $12_2$, etc.), formée par le chanfrein ($7_1$, $7_2$, etc.), du bord de coupe ($5_1$, $5_2$, etc.) utile, s'étendant plié, est supérieure ou à peu près égale à la partie ($6_1$, $14_2$, $14_3$, etc.) du bord de coupe utile, s'étendant perpendiculairement au plan médian longitudinal (8).

4. Lame de scie selon une ou plusieurs des revendications 1 à 3, **caractérisée en ce que** les chanfreins ($7_1$, $7_2$, $7_3$, etc.) sont prévus sous un angle de chanfrein (9), entre 20° et 60°, de préférence environ égal à 45°.

5. Lame de scie selon une ou plusieurs des revendications 1 à 4, **caractérisée en ce que** les flancs ($10_1$, $10_2$, $10_3$, etc.) dc toutes les dents ($2_1$, $2_2$, $2_3$, etc.) sont prévus dans un angle de flanc ($11_1$, $11_2$, $11_3$, etc.) égal à 8°.

6. Lame de scie selon la revendication 1, **caractérisée en ce que** les flancs ($10_1$, $10_2$, $10_3$, etc.) de toutes les dents ($2_1$, $2_2$, $2_3$, etc.) sont prévus dans un angle de flanc (11) coïncidant avec projection se recouvrant.

7. Lame de scie selon une ou plusieurs des revendications 1 à 6, **caractérisée en ce que** les tranchante sont prévus sur des dents polies, revêtues de métal dur et toutes les dents ($2_1$, $2_2$, $2_3$, etc.) présentent une plus grande largeur que le corps de base (1).

8. Lame de scie selon une ou plusieurs des revendications 1 à 7, **caractérisée en ce que** les dents ($2_1$, $2_2$, $2_3$, etc.) présentent dans les groupes de dents un échelonnement linéaire en hauteur et en largeur.

9. Lame de scie selon une ou plusieurs des revendications 1 à 8, **caractérisée en ce que** dans le cycle se renouvelant des dents sont formés des gmupes qui présentent des divisions ($t_1$, $t_2$, $t_3$, etc.) variables, se renouvelant.

Fig. 1

Fig. 2

EP 0 551 104 B2

Fig. 4

Fig. 3

Fig. 5

Fig. 6

EP 0 551 104 B2

Fig. 7

EP 0 551 104 B2